# EUROPÄISCHE PATENTSCHRIFT

(11) **EP 0 560 129 B1**
(45) Veröffentlichungstag und Bekanntmachung des Hinweises auf die Patenterteilung: **02.10.1996**
(21) Anmeldenummer: 93102912.8
(22) Anmeldetag: 25.02.1993
(51) Int. Cl.: C08J 5/04, C08L 23/12

(54) **Flächiger Verbundwerkstoff**
Flat composite material
Pièce composite plate

(30) Priorität: 07.03.1992 DE 4207244; 29.04.1992 DE 4213974
(43) Veröffentlichungstag der Anmeldung: 15.09.1993
(73) Patentinhaber: BASF Aktiengesellschaft, 67063 Ludwigshafen (DE)
(72) Erfinder: Baumgartl, Horst, Dr., W-6500 Mainz 1 (DE); Schlarb, Alois, Dr., W-6710 Frankenthal (DE); Wahl, Ludwig, W-6707 Schifferstadt (DE); Ittemann, Peter, Dr., W-6800 Mannheim 31 (DE); Brentrup, Karl-Ludwig, W-4500 Osnabrück (DE)

(56) Entgegenhaltungen:
- EP-A- 0 319 589
- GB-A- 1 159 230
- GB-A- 2 090 849
- GB-A- 2 096 195

## Beschreibung

Die Erfindung betrifft einen flächigen Verbundwerkstoff aus einer Polyolefinmatrix und Naturfasermatten als Verstärkungsmaterial.

Verbundwerkstoffe aus einer Polypropylenmatrix und Glasfasermatten als Verstärkungsmaterial sind bekannt. Sie werden in zunehmendem Maße zur Herstellung von Automobilteilen verwendet. Die Einsatzmöglichkeiten derartiger Verbundwerkstoffe sind jedoch durch den verhältnismäßig hohen Preis der Glasfasermatten begrenzt. Eine Möglichkeit zur Kostenreduzierung wäre der Einsatz billigerer Fasermaterialien.

In der DE-A 14 54 988 ist die Herstellung von Formkörpern aus mit faserigen Substanzen verstärkten Thermoplasten beschrieben, wobei vorgebildete Verbundstoffe zum plastischen Fließen erhitzt und anschließend unter Druck verformt werden. Die faserigen Substanzen können in Form von Matten vorliegen, sie können auch organischer Natur sein, wobei als Beispiele Wolle und Baumwolle genannt sind. Diese Fasern ergeben jedoch Verbundwerkstoffe, die eine geringe Festigkeit und Steifigkeit aufweisen und daher leicht brechen. Die EP-A 345 463 betrifft faserverstärkte Thermoplastbahnen. Als geeignete Naturfasern, aus denen die verstärkend wirkenden Fasermatten hergestellt werden können, sind z.B. Jutefasern genannt. Es hat sich gezeigt, daß Verbundwerkstoffe aus Polyolefinmatrix und Jutefasermatten zwar ein verbessertes Festigkeits- und Steifigkeitsniveau aufweisen; die Schlagzähigkeit der Verbundwerkstoffe ist aber zu niedrig, was zu Sprödbruch führen kann.

In WO-A 88/10286 ist ein Verbundmaterial beschrieben, das durch homogenes Einarbeiten von Holzmehl und von Naturfasern, z.B. aus Sisal, in eine Polyolefinmatrix und Zerkleinern zu Partikeln hergestellt wird. Platten, die aus einem solche Kurzfasern enthaltenden Verbundmaterial gefertigt werden, weisen auch eine recht geringe Festigkeit und Schlagzähigkeit auf. Dies trifft auch auf Verbundkörper zu, die nach US-A 3 728 294 durch Beschichten von 6,3 mm langen Sisalfasern mit einem Siliconöl, Vermischen mit Thermoplast-Granulat und Spritzgießen der Mischung hergestellt wurden. Das Siliconöl bewirkt eine gleichmäßige Verteilung der hydrophilen Fasern in der hydrophoben Thermoplast-Matrix.

Der Erfindung lag also die Aufgabe zugrunde, billige Verbundwerkstoffe aus einer Polyolefinmatrix und Naturfasermatten bereitzustellen, die eine verhältnismäßig hohe Zähigkeit, Festigkeit und Steifigkeit aufweisen.

Diese Aufgabe wird erfindungsgemäß gelöst durch einen flächigen Verbundwerkstoff aus einer Polyolefinmatrix und 20 bis 70 Gew.-% Naturfasermatten als Verstärkungsmaterial, wobei die Polyolefinmatrix aus Polypropylen mit einem Schmelzindex MFI zwischen 5 und 500 g/10 min bei 230°C/2,16 kg besteht, und die Naturfasermatten genadelt sind und die Fasern eine mittlere Länge von mehr als 10 mm und ein Fasergewicht von mehr als 10 tex aufweisen. Derartige Verbundwerkstoffe zeichnen sich, bedingt durch die Verwendung verhältnismäßig billiger nachwachsender Rohstoffe, durch ein günstiges Preis/Leistungs-Verhältnis aus. Sie sind gut recyclierbar und können rückstandfrei verbrannt werden.

Die GB-A 2 096 195 beschreibt einen flächigen Verbundwerkstoff, der durch heißes Verpressen einer Fasermatte aus Kunststoff-Fasern und Verstärkungsfasern hergestellt werden kann. Es sind eine Vielzahl von Kunststoffen aufgezählt, aus denen die Kunststoff-Fasern bestehen können und eine Vielzahl von natürlichen und künstlichen Fasern, aus denen die Verstärkungsfasern bestehen können.

Die GB-A 2 090 849 betrifft eine Harzmasse, die durch Vermischen von 10 Teilen thermoplastischem Harz und 0,5 bis 20 Teilen Flachs oder flachsartigen Fasern mit einer Länge von höchstens 10 mm hergestellt werden. Die Verarbeitung der Harzmasse geschieht durch Extrusion oder Spritzgießen, es handelt sich also nicht um einen flächigen Verbundwerkstoff.

Als Polyolefine sind Ethylen- und Propylenhomo- und copolymerisate bevorzugt. Besonders gut geeignet ist Polypropylen mit einem Schmelzindex MFI zwischen 5 und 500, insbesondere zwischen 50 und 400 g/10 min (bei 230°C/2,16 kg), sowie entsprechende Pfropfcopolymerisate, z.B. mit Acrylsäure oder Maleinsäureanhydrid. Wenn man als Pclyolefinmatrix eine Mischung verwendet aus 99 - 80 Gew.-% Polypropylen und 1 - 20 Gew.-% eines mit Maleinsäureanhydrid gepfropften Polypropylens, dann erhält man Verbundwerkstoffe mit besonders guter Festigkeit und Steifigkeit. Dem Polyolefin können bis zu 100 Gew.-% Rezyklat von aufgearbeitetem Abfallmaterial mit 20 bis 50 Gew.-% kurzen Naturfasern oder Glasfasern zugesetzt sein, ferner kann es die üblichen Zusatzstoffe wie Stabilisatoren, Füllstoffe und Flammschutzmittel enthalten.

Als Fasermatten kommen vorzugsweise sehr grobe Pflanzenfasern in Frage, insbesondere solche aus Sisal (25-35 tex), Kokos (50-70 tex) oder Banane (20-35 tex). (Zum Vergleich: Jute hat ein Fasergewicht von etwa 3 - 4 tex, Baumwolle ebenfalls von weniger als 10 tex.) Daneben können die Fasermatten in untergeordneten Mengen auch andere Fasern enthalten, z.B. solche aus Glas, Jute oder Flachs. Die Matten werden auf übliche Weise durch Ablegen von Fasern oder nach dem Krempelverfahren hergestellt. Die Fasern, aus denen die Matten bestehen, sollen eine mittlere Länge von mehr als 10 mm aufweisen, besonders bevorzugt sind sie 20 bis 100 mm lang. Es ist zwar nicht unbedingt notwendig, die Fasern mit einem Beschichtungsmittel, z.B. einem Haftvermittler oder einer Schlichte zu versehen, es ist jedoch vorteilhaft, wenn die Mischung aus Polyolefinmatrix und Naturfasern übliche Haftvermittler, wie z.B. reaktive Silane in Mengen von 0,1 bis 2 Gew.% enthält. Der Haftvermittler kann entweder auf das Polyolefin-Granulat aufgetrommelt werden oder auf die Fasern durch Tränken oder Aufsprühen aufgebracht werden. Es werden auf übliche Weise genadelte Matten eingesetzt, die bauschiger und voluminöser sind als ungenadelte Matten. Das Flächengewicht der Fasermatten kann sich in weiten Grenzen zwischen 200 und 4000 [g·m⁻²] bewegen.

Zur Herstellung der erfindungsgemäßen Verbundwerkstoffe werden die Fasermatten mit geschmolzenem Polyolefin imprägniert. Die Mengenverhältnisse sind dabei so zu wählen, daß im fertigen Werkstoff der Fasergehalt 20 bis 70, vorzugsweise 30 bis 50 Gew.-% beträgt. Bei einer bevorzugten Ausführungsform werden in eine Doppelbandpresse gleichzeitig Fasermatten und Polyolefinschmelze zugeführt und bei Drücken zwischen 1 und 50 [bar] miteinander verpreßt. Grundsätzlich ist es auch möglich, das Polyolefin in Form von Folien, Pulver, Granulat, sowie als Lösung oder Emulsion mit den Fasermatten zusammenzuführen und gemeinsam oberhalb der Schmelztemperatur diskontinuierlich oder kontinuierlich, z.B. auf einem Kalander oder einem Glättwerk, zu verpressen. Das Verpressen muß unter einem so hohen Druck vorgenommen werden, daß nach dem Abkühlen, vorzugsweise auf Raumtemperatur, ein kompaktes, flächiges Halbzeug entsteht.

Glättwerke sind in der kunststoffverarbeitenden Industrie üblich, ihre Wirkungsweise ist z.B. beschrieben von W. Müller und M. Dienst, "In-line-Herstellung von Platten und Folien", Zeitschrift Kunststoffe 79, 1989, Seiten 1-9.

Im Gegensatz zu den einfacheren (und billigeren) Glättwerken besitzen Kalander im allgemeinen einen höheren möglichen Liniendruck. Durch Einbau von peripheren Steuerungsgeräten, z.B. zum Schrägstellen der Walzen, werden sie speziell auf die jeweiligen Bedürfnisse der Produktionsanlagen mit schweren Walzen ausgelegt.

Dieses Halbzeug kann zugeschnitten und nach üblichen Methoden durch Pressen oder Tiefziehen bei Temperaturen oberhalb des Erweichungsbereichs des Thermoplasten zu Formteilen verarbeitet werden, die z.B. in der Automobilindustrie, im Maschinenbau und für Haushaltsgeräte Anwendung finden.

### Beispiele

1. Zwei genadelte Sisalfasermatten mit dem Flächengewicht 800 [g·m⁻²] wurden mit Polypropylen-Schmelzefilmen mit einem Schmelzindex von 80 [g/10 min] (230°C; 2,16 kg) getränkt und in einer Doppelbandpresse zu einem flächigen Halbzeug mit einer Dicke von 3,8 mm und einem Fasergehalt von 40 Gew.% verpreßt.
Passend zugeschnittene Halbzeugtafeln wurden in einem Umluftofen auf 210°C erhitzt und in einer schnell schließenden hydraulischen Presse in einem Tauchkantenwerkzeug bei einer Werkzeugtemperatur von 60°C zu einem Fertigteil verpreßt.
Aus dem Fertigteil wurden Prüfkörper ausgeschnitten, an denen nach DIN EN 63 Zugfestigkeit und Zug-E-Modul, sowie nach ISO 179 die Schlagzähigkeit gemessen wurde. Ergebnisse siehe Tabelle.
2. Es wurde wie in Beispiel 1 gearbeitet, das Polypropylen enthielt aber 1 Gew.% eines handelsüblichen Haftvermittlers auf Basis eines reaktiven Silans welches auf das Polypropylengranulat vor der Extrusion aufgetrommelt worden war.

**Tabelle**

| Beispiel | 1 | 2 |
|---|---|---|
| Zugfestigkeit [MPa] | 35 | 53 |
| Zug-E-Modul [MPa] | 3600 | 4400 |
| Schlagzähigkeit [kJ·m⁻²] | 30 | 14 |

3. Zwei genadelte Sisalmatten mit einem Flächengewicht von jeweils 400 g/m² werden mit einem Polypropylen-Schmelzefilm mit einem Schmelzindex von 80 g/10 min (230°C; 2,16 kg) in einem Glättwerk, bestehend aus 3 Walzen (Walzenbreite 1 m) getränkt.
Dazu wird das Polypropylen zunächst in einem Zweischnekkenextruder aufgeschmolzen und über eine 1 m breite Breitschlitzdüse extrudiert.
Der Schmelzefilm wird dann auf die eine Sisalmatte abgelegt und mit der zweiten von oben bedeckt. Beim Passieren des ersten Walzenspaltes (Dickeneinstellung 1.9 mm) wird die Sisalmatte mit der aufgrund der jetzt erfolgenden Abkühlung höherviskosen PP-Schmelze getränkt. Nach Passieren des zweiten Walzenspaltes und einer Förderstrecke von ca. 6 m ist das entstandene Halbzeug soweit abgekühlt (Kühlung durch Umgebungsluft), daß es stapelbar ist. Das Halbzeug wird auf eine Papprolle mit einem Durchmesser von 20 cm motorgetrieben aufgerollt.
Die Schmelzetemperatur an der Extrudierdüse beträgt 210°C, die Walzentemperaturen des Glättwerks jeweils 60°C, die Abzugsgeschwindigkeit 4 m/min. Die Dicke des entstandenen Halbzeugs liegt bei 2,7 mm.

## Patentansprüche

1. Flächiger Verbundwerkstoff aus einer Polyolefinmatrix und 20 bis 70 Gew.-% Naturfasermatten als Verstärkungsmaterial, dadurch gekennzeichnet, daß die Polyolefin-matrix aus Polypropylen mit einem Schmelzindex MFI zwischen 5 und 500 g/10 in bei 230°C/2,16 kg besteht, und die Naturfasern genadelt sind und eine mittlere Länge von mehr als 10 mm und ein Fasergewicht von mehr als 10 tex aufweisen.

2. Flächiger Verbundwerkstoff nach Anspruch 1, dadurch gekennzeichnet, daß die Fasermatten aus Sisal-Fasern bestehen.

3. Flächiger Verbundwerkstoff nach Anspruch 1, dadurch gekennzeichnet, daß die Polyolefinmatrix eine Mischung aus 99 - 80 Gew.-% Polypropylen und 1 bis 20 Gew.-% eines mit Maleinsäureanhydrid gepfropften Polypropylens ist.

4. Flächiger Verbundwerkstoff nach Anspruch 1, dadurch gekennzeichnet, daß die 0,1 bis 2 Gew.-% eines Haftvermittlers enthält.

5. Flächiger Verbundwerkstoff nach Anspruch 4, dadurch gekennzeichnet, daß der Haftvermittler ein reaktives Silan ist.

6. Verwendung des flächigen Verbundwerkstoffs nach Anspruch 1 zur Herstellung von Automobilteilen, Maschinenteilen und Haushaltsartikeln.

## Claims

1. A sheetlike composite comprising a polyolefin matrix and from 20 to 70 % by weight of natural fiber mats as reinforcing material, wherein the polyolefin matrix consists of polypropylene having a melt flow index MFI of from 5 to 500 g/10 min at 230°C/2.16 kg and the natural fibers have been needled and have an average length of more than 10 mm and a fiber weight of more than 10 tex.

2. A sheetlike composite as claimed in claim 1, wherein the fiber mats consist of sisal fibers.

3. A sheetlike composite as claimed in claim 1, wherein the polyolefin matrix is a mixture of 99 - 80 % by weight of polypropylene and 1 - 20 % by weight of a polypropylene grafted with maleic anhydride.

4. A sheetlike composite as claimed in claim 1, including from 0.1 to 2 % by weight of an adhesion promoter.

5. A sheetlike composite as claimed in claim 4, wherein the adhesion promoter is a reactive silane.

6. The use of a sheetlike composite as claimed in claim 1 for manufacturing automotive parts, machine parts and household goods.

## Revendications

1. Matériau composite en nappe, se composant d'une matrice de polyoléfine et de 20 à 70% en poids de mats de fibres naturelles servant de matériau de renforcement, caractérisé en ce que la matrice de polyoléfine est faite de polypropylène ayant un indice d'écoulement à l'état fondu MFI compris entre 5 et 500 g/10 min à 230°C/2,16 kg, et en ce que les fibres naturelles sont aiguilletées et présentent une longueur moyenne de plus de 10 mm et un poids de plus de 10 tex.

2. Matériau composite en nappe selon la revendication 1, caractérisé en ce que les mats de fibres sont faits de fibres de sisal.

3. Matériau composite en nappe selon la revendication 1, caractérisé en ce que la matrice de polyoléfine est un mélange de 99 à 80% en poids de polypropylène et de 1 à 20% en poids d'un polypropylène greffé avec de l'anhydride maléique.

4. Matériau composite en nappe selon la revendication 1, caractérisé en ce qu'il contient 0,1 à 2% en poids d'un agent d'adhérence.

5. Matériau composite en nappe selon la revendication 4, caractérisé en ce que l'agent d'adhérence est un silane réactif.

6. Utilisation du matériau composite en nappe selon la revendication 1 pour la fabrication de pièces d'automobiles, de pièces de machines et d'articles ménagers.
